# EUROPÄISCHE PATENTSCHRIFT

(11) **EP 0 613 226 B1**
(45) Veröffentlichungstag und Bekanntmachung des Hinweises auf die Patenterteilung: **02.05.1997**
(21) Anmeldenummer: 93102346.9
(22) Anmeldetag: 15.02.1993
(51) Int. Cl.: H02H 9/04

(54) **Ableitertrennschalter**
Disconnector for surge arrester
Sectionneur pour parafoudre

(43) Veröffentlichungstag der Anmeldung: 31.08.1994
(73) Patentinhaber: SIEMENS AKTIENGESELLSCHAFT, 80333 München (DE)
(72) Erfinder: Harr, Dieter, Dipl.-Ing., W-8400 Regensburg (DE); Huber, Markus, Dipl.-Ing. (Uni), W-8407 Obertraubl. (Piesenkofen) (DE); Stich, Karl-Heinz, W-8400 Regensburg (DE)

(56) Entgegenhaltungen:
- EP-A- 0 173 018
- EP-A- 0 246 644

## Beschreibung

Die Erfindung bezieht sich auf einen Ableitertrennschalter, der mit Überspannungsableitern gegen Erde zum Schutz von Verbrauchern oder zu schützenden Netzen bzw. Netzteilen arbeitet, im einzelnen nach Gattungsbegriff von Patentanspruch 1. Die Überspannungsableiter sind ihrerseits bei Defekten durch eine Überwachungseinrichtung gesichert, die auf zumindest einen Arbeitskontakt in einem Erdleiter im Ableitungszug arbeitet. Die Überwachungseinrichtung arbeitet mit einem Ringkern aus magnetisch leitendem Material, durch den die Erdleiter als Primärleiter bzw. Primärwicklung hindurchgeführt sind und dessen Sekundärwicklung mit einem Auslöser verbunden ist. Der Auslöser steht mit Arbeitskontakten in Wirkverbindung. Ein derartiger Ableitertrennschalter ist aus der EP-B-0 173 018 bekannt.

Überspannungen, hervorgerufen durch Gewitter oder Schaltvorgänge können elektrische Niederspannungsanlagen schädigen, indem sie Isolationen zerstören, ggf. vorhandene Fehlerstromschutzschalter zum unerwünschten Auslösen bringen oder indem sie elektronische Bauteile in Verbrauchergeräten schädigen. Solche Bauteile werden bereits durch die Auswirkung entfernter Blitzeinschläge beeinflußt oder zerstört.

Überspannungsableiter können Funkenstrecken oder Varistoren sein. Sie können selbst schadhaft werden und Dauerströme bis zu Kurzschlußströmen durchlassen. Wenn ein Überspannungsableiter schadhaft geworden ist, belastet er durch die Dauerströme die Installationsanlage und kann diese schädigen. Das kann bis zur Brandgefahr führen. Man ist daher bemüht, den Überspannungsableiter selbst bei Defekten zu sichern. Bei Ableitertrennschaltern ist oftmals ein Auslöser mit einer Detektionseinrichtung vorgesehen, der bei gefährlichen Ableitströmen anspricht und Arbeitskontakte in den zu schützenden Erdleitungen öffnet.

Ableitertrennschalter müssen so ausgeführt werden, daß Fehlauslösungen durch Stoßströme vermiedene werden.

Der Erfindung liegt die Aufgabe zugrunde, einen Ableitertrennschalter zu entwickeln, der bei hoher Stoßstromfestigkeit eine optimale Auslegung seines Abschaltverhaltens ermöglicht.

Die Lösung der geschilderten Aufgabe erfolgt durch einen Ableitertrennschalter nach Patentanspruch 1. Hierbei ist der Sekundärwicklung eine Gleichrichteranordnung nachgeschaltet, die über einen Spannungsbegrenzer und eine Impulsverbreiterungseinrichtung eine Verzögerungsschaltung versorgt, der der Auslöser nachgeschaltet ist.

Bei einem derartigen Ableitertrennschalter kann man die Auslösezeit in Abhängigkeit vom Fehlerstrom zwischen einem Mindestverzug von beispielsweise 0,1 s und einer Maximalauslösezeit von beispielsweise 5 s einstellen. Die genannte Einstellung empfiehlt sich bei Auslösenennfehlerströmen von 0,3 A bis zum zweifachen des genannten Auslösenennfehlerstroms. Beim fünffachen Auslösenennfehlerstrom ist es praxisgerecht, die Auslösezeit zwischen 0,1 s und 0,2 s zu wählen. Dieses Auslöseverhalten empfiehlt sich auch bei 500 A. Das Auslöseverhalten kann am Spannungsbegrenzer, an der Impulseverbreiterungseinrichtung sowie an der Verzögerungsschaltung in Abstimmung aufeinander eingestellt werden.

Damit ein Mindestverzug von beispielsweise 0,1 s unabhängig vom Fehlerstrom eingehalten werden kann, muß der Gleichrichtmittelwert einer Spannung U1, die die Verzögerungsschaltung und den nachgeschalteten Auslöser versorgt, unabhängig vom Fehlerstrom in etwa konstant gehalten werden.

Diese Verhältnisse erzielt man durch einen Spannungsbegrenzer im Zusammenwirken mit einer Impulsverbreiterungseinrichtung.

Der Gleichrichtmittelwert der Spannung U1 läßt sich konstant halten: bei kleinen Fehlerströmen im Bereich von ein- bis fünffachem Auslösenennfehlerstrom mittels des Spannungsbegrenzers, der die Amplitude U1 begrenzt - und bei hohen Fehlerströmen im Bereich bis ca. 500 A mittels des Spannungsbegrenzers und der Impulsverbreiterungseinrichtung.

Bei hohen Fehlerströmen wird der Ringkern sehr weit in die Sättigung ausgesteuert. Die Ausgangsspannung an der Sekundärwicklung besteht demzufolge aus sehr schmalen nadelförmigen Impulsen. Der Spannungsbegrenzer begrenzt nun die Amplitude dieser sehr schmalen nadelförmigen Impulse. Aufgrund der Schmalheit der amplitudenbegrenzten Impulse wird der Gleichrichtmittelwert der Spannung U1 so klein, daß der Auslöser nicht mehr auslösen kann. Mittels der Imlulsverbreiterungseinrichtung läßt sich die Breite der amplitudenbegrenzten Impulse so weit vergrößern, bis der Gleichrichtmittelwert der Spannung U1 wieder genauso groß ist wie bei kleinen Fehlerströmen.

Die Impulsverbreiterungseinrichtung ist in einem einfachen Beispiel vorteilhaft als Kapazität ausgeführt.Die Kapazität bewirkt bei hohen Fehlerströmen einen zusätzlichen Sekundärstrom in der Sekundärwicklung. Der Ringkern wird weniger weit ausgesteuert, die Kapazität bis zum Eingreifen des Spannungsbegrenzers aufgeladen. Diese Ladung wird abgegeben, wenn die Spannung an der Sekundärwicklung zuzüglich der doppelten Diodenschwellspannung bei Ausführung der Gleichrichteranordnung als Brückengleichrichter kleiner wird als die Spannung an der Kapazität der Impulsverbreiterungseinrichtung. Über das Ausmaß der Impulsverbreiterungseinrichtung kann man in Verbindung mit den weiteren Schaltungselementen die Auslösezeit bzw. bei verschiedenartigen abzuleitenden Stromformen das Auslöseintervall einstellen.

Als Spannungsbegrenzer eignet sich z.B. eine Diode. Es ist günstig, die Gleichrichteranordnung als Brückengleichrichter auszuführen. Die Verzögerungsschaltung kann in an sich bekannter Weise als RC-Glied ausgeführt werden.

Zur Vermeidung von Fehlauslösungen durch Stoßströme ist also das Zusammenspiel von zwei Einrichtungen vorgesehen: Eine Spannungsbegrenzung hinter der Gleichrichteranordnung und eine Spannungsbegrenzung mit einer höheren Ansprechschwelle vor der Gleichrichteranordnung.

Die Erfindung soll nun anhand von in der Zeichnung grob schematisch wiedergegebenen Ausführungsbeispielen näher erläutert werden:
- In FIG 1: ist ein Ausführungsbeispiel für einen Ableitertrennschalter veranschaulicht.
- In FIG 2: ist für das Ausführungsbeispiel, wonach die Impulsverbreiterungseinrichtung als Kapazität ausgeführt ist, der zeitliche Verlauf der Spannung U1 hinter der Gleichrichteranordnung und der Spannung U2 am Auslöser in einem Diagramm für den Fall veranschaulicht, daß die Kapazität zu niedrig ist, um die Auslösespannung Ua zu erreichen.
- In FIG 3: ist im Diagramm nach Art des in FIG 2 Wiedergegebenen veranschaulicht, wie bei ausreichender Impulsverbreiterung U2 die Auslösespannung Ua erreicht bzw. überschreitet, so daß die Auslösung für eine bestimmte Stromform bei einem gewünschten Schwellwert sichergestellt ist.

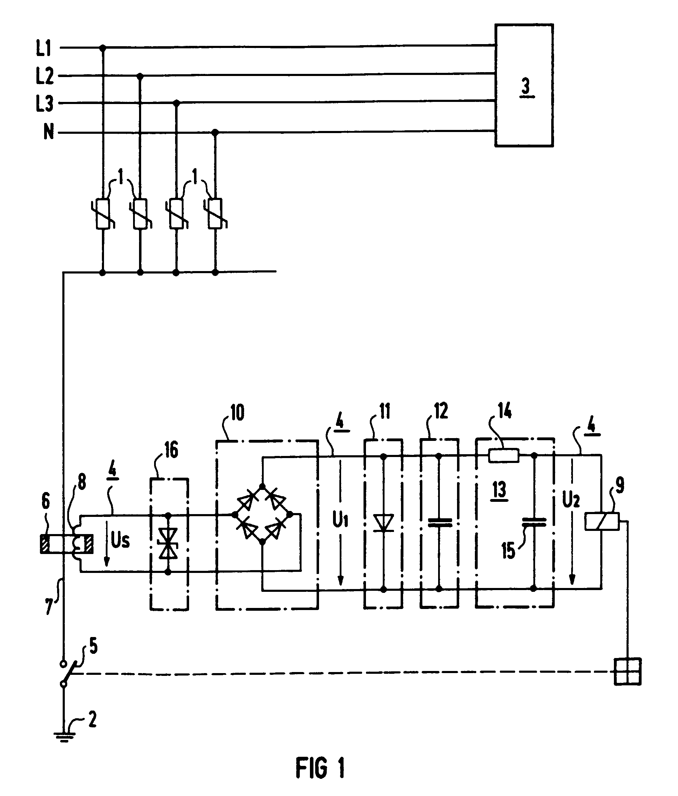

Der Ableitertrennschalter nach FIG 1 arbeitet mit Überspannungsableitern 1 gegen Erde 2 zum Schutz von Verbrauchern 3 oder zu schützenden Netzen bzw. Netzteilen. Die Überspannungsableiter 1 sind ihrerseits bei Defekten durch eine Überwachungseinrichtung 4 gesichert, die auf Arbeitskontakte, im Ausführungsbeispiel einen gemeinsamen Arbeitskontakt 5, im Erdleiterim Ableitungszug arbeitet. Die Überwachungseinrichtung 4 weist einen Ringkern 6 aus magnetisch leitendem Material auf, durch den die zu schützenden Leiter, im Ausführungsbeispiel ein Erdleiter, als Primärleiter 7 bzw. Primärwicklung hindurchgeführt sind. Die Sekundärwicklung 8 ist mit einem Auslöser 9 verbunden, der mit dem bzw. den Arbeitskontakten 5 in Wirkverbindung steht.

Der Sekundärwicklung 8 ist eine Gleichrichteranordnung 10 nachgeschaltet, die über einen Spannungsbegrenzer 11 eine Impulsverbreiterungseinrichtung 12 eine Verzögerungsschaltung 13 versorgt, der der Auslöser 9 nachgeschaltet ist.

Fehlauslösungen durch Stoßströme werden durch den Spannungsbegrenzer 11 hinter der Gleichrichteranordnung 10 und eine zusätzliche Spannungsbegrenzung 16 mit einer höheren Ansprechwelle als beim Spannungsbegrenzer 11, vor der Gleichrichteranordnung 10, vermieden.

Die Gleichrichteranordnung 10 ist vorteilhaft als Brückengleichrichter ausgebildet werden, der Spannungsbegrenzer 11 kann in einfacher Weise als Diode ausgeführt sein. Die Impulsverbreiterungseinrichtung 12 ist im Ausführungsbeispiel als Kapazität realisiert und die Verzögerungsschaltung 13 in an sich bekannter Weise als RC-Glied aus dem Widerstand 14 und der Kapazität 15 gebildet. Für die zusätzliche Spannungsbegrenzung 16 kann z.B. eine Transildiode verwendet werden.

Der Ableitertrennschalter funktioniert wie folgt:
Wenn durch die Überspannungsableiter 1 und über die Erdleiter bzw. den Erdleiter als Primärleiter 7 zu lange und zu hohe Arbeitsströme anstehen, wird in der Sekundärwicklung 8 eine Spannung Us induziert, die über die Gleichrichteranordnung 10 gleichgerichtet wird.

Mittels des Spannungsbegrenzers 11 und der Impulsverbreiterungseinrichtung 12 wird der Gleichspannungsmittelwert der Spannung U1, die die Verzögerungsschaltung 13 und den nachgeschalteten Auslöser 9 versorgt, unabhängig vom Fehlerstrom in etwa konstant gehalten. Dies empfiehlt sich, um einen vorgegebenen Mindestverzug unabhängig vom Fehlerstrom einhalten zu können. Der Gleichrichtmittelwert der Spannung U1 wird konstant gehalten, bei kleinen Fehlerströmen mittels des Spannungsbegrenzers 11, der die Amplitude von U1 begrenzt, und bei hohen Fehlerströmen mittels des Spannungsbegrenzers 11 und der Impulsverbreiterungseinrichtung 12.

Die Impulsverbreiterungseinrichtung 12 ist hier als Kapazität ausgeführt. Die Kapazität bewirkt bei hohen Fehlerströmen einen zusätzlichen Sekundärstrom in der Sekundärwicklung 8. Der Ringkern 6 wird weniger weit ausgesteuert, die Kapazität bis zum Eingreifen des Spannungsbegrenzers 11 aufgeladen. Diese Ladung wird abgegeben, wenn die Spannung Us an der Sekundärwicklung 8 zuzüglich zweimal die Diodenschwellspannung der Dioden der Gleichrichteranordnung 10, in der Ausführung als Brückengleichrichter, kleiner wird als die Spannung an der Kapazität der Impulsverbreiterungseinrichtung 12.

Fehlauslösungen durch Stoßströme werden durch den Spannungsbegrenzer 11 hinter der Gleichrichteranordnung 10 und eine zusätzliche Spannungsbegrenzung 16 mit einer höheren Ansprechschwelle als beim Spannungsbegrenzer 11, vor der Gleichrichteranordnung 10, vermieden.

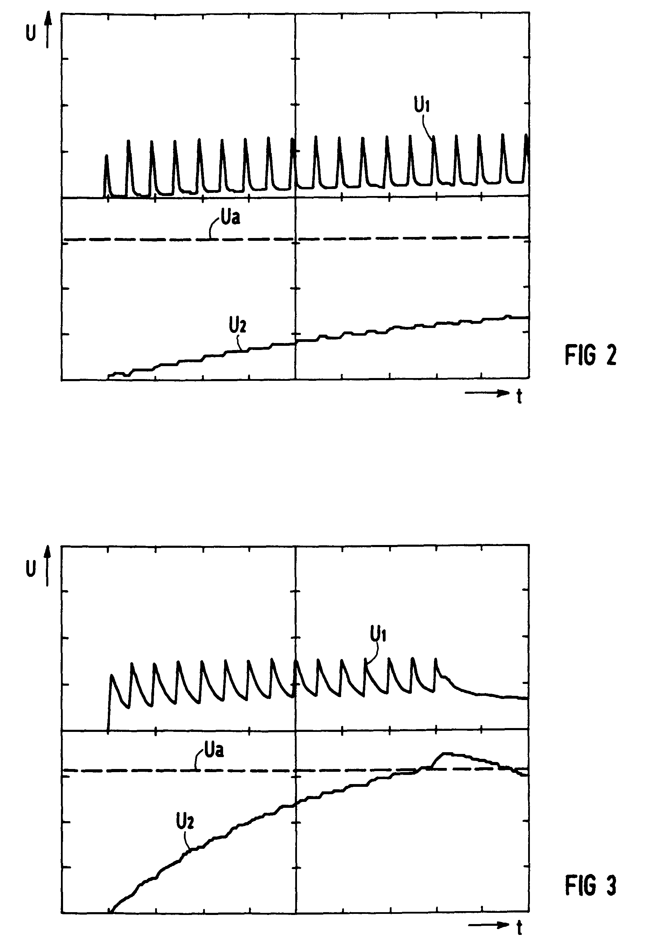

In FIG 2 ist in einem Diagramm, mit der Zeit t auf der Abszisse und der Spannung U auf der Ordinate, der Verlauf der Spannung U1 am Spannungsbegrenzer 11 bzw. der Impulsverbreiterungseinrichtung 12 dargestellt. Es ist zu ersehen, daß bei einer zu geringen oder bei fehlender Kapazität die Spannung U2 am Auslöser 9 die Auslösespannung Ua nicht in einem vorgegebenen Zeitraum oder gar nicht mehr erreicht. Bei geeigneter Dimensionierung erreicht die Spannung U2 nach FIG 3 die Auslösespannung Ua innerhalb eines gewünschten Zeitraums.

Günstige Auslösezeiträume sind:
Bei einem Ableitstrom, der einem Auslösenennfehlerstrom von 0,3 A entspricht, sind günstige Auslösezeiten:
- bei Nennfehlerstrom eine Auslösezeit zwischen den Werten 0,1 s und 5 s, wobei die Grenzwerte eingeschlossen sind;
- beim zweifachen Nennfehlerstrom die Auslösezeit zwischen 0,1 s und 0,5 s, wobei die Grenzwerte eingeschlossen sind;
- beim fünfachen Nennfehlerstrom die Auslösezeit zwischen 0,1 s und 0,2 s, wobei die Grenzwerte eingeschlossen sind;
- bei einem Fehlerstrom von 500 A die Auslösezeit zwischen 0,1 s und 0,2 s, wobei die Grenzwerte wieder eingeschlossen sind.

Für die Stoßstromfestigkeit gegen einen Impuls 8/20 µs ist ein Stromscheitelwert von 30 kA günstig.

## Patentansprüche

1. Ableitertrennschalter, der mit Überspannungsableitern (1) gegen Erde (2) zum Schutz von Verbrauchern (3) oder zu schützenden Netzen bzw. Netzteilen arbeitet, wobei die Überspannungsableiter (1) ihrerseits bei Defekten durch eine Überwachungseinrichtung (4) gesichert sind, die auf zumindest einen Arbeitskontakt (5) in einem Erdleiter im Ableitungszug arbeitet, wobei die Überwachungseinrichtung (4), mit einem Ringkern (6) aus magnetisch leitendem Material arbeitet, durch den der Erdleiter als Primärleiter (7) bzw. Primärwicklung hindurchgeführt ist und dessen Sekundärwicklung (8) mit einem Auslöser (9) verbunden ist, der zumindest mit dem Arbeitskontakt (5) in Wirkverbindung steht, **dadurch gekennzeichnet**, daß der Sekundärwicklung (8) eine Gleichrichteranordnung (10) nachgeschaltet ist, die über einen Spannungsbegrenzer (11) und eine Impulsverbreiterungseinrichtung (12) eine Verzögerungsschaltung (13) versorgt, der der Auslöser (9) nachgeschaltet ist.

2. Ableitertrennschalter nach Anspruch 1,
**dadurch gekennzeichnet**, daß die Gleichrichteranordnung (10) als Brückengleichrichter ausgeführt ist.

3. Ableitertrennschalter nach Anspruch 1,
**dadurch gekennzeichnet**, daß der Spannungsbegrenzer (11) eine Diode ist.

4. Ableitertrennschalter nach Anspruch 1,
**dadurch gekennzeichnet**, daß die Impulsverbreiterungseinrichtung (12) als Kapazität ausgeführt ist.

5. Ableitertrennschalter nach Anspruch 1,
**dadurch gekennzeichnet**, daß die Verzögerungsschaltung (13) in an sich bekannter Weise als RC-Glied ausgeführt ist.

6. Ableitertrennschalter nach einem der Ansprüche 1-5,
**dadurch gekennzeichnet,** daß dem Spannungsbegrenzer (11) eine zusätzliche Spannungsbegrenzung (16) vor dem Gleichrichter (10) zur Erzielung von Stoßstromfestigkeit vorgeschaltet ist.

## Claims

1. Diverter isolator which operates with surge diverters (1) to earth (2) for the purpose of protecting loads (3) or power supply systems and/or power supply units which are to be protected, with the surge diverters (1) being safeguarded for their part in the case of defects by means of a monitoring device (4) which operates into at least one operating contact (5) in an earth conductor in the diversion pull, with the monitoring device (4) operating with a toroidal core (6) which is made of magnetically conductive material and through which core the earth conductor is guided as a primary conductor (7) or a primary winding, and the secondary winding (8) of which core is connected to a trip (9) which is operatively connected to at least the operating contact (5), characterised in that connected downstream of the secondary winding (8) there is a rectifier arrangement (10) which by way of a voltage limiter (11) and a pulse-spreading device (12) supplies a time-delay circuit (13), downstream of which the trip (9) is connected.

2. Diverter isolator according to claim 1,
characterised in that the rectifier arrangement (10) is realized as a bridge-connected rectifier.

3. Diverter isolator according to claim 1,
characterised in that the voltage limiter (11) is a diode.

4. Diverter isolator according to claim 1,
characterised in that the pulse-spreading device (12) is realized as a capacitor.

5. Diverter isolator according to claim 1,
characterised in that the time-delay circuit (13) is realized in a manner known per se as an RC element.

6. Diverter isolator according to one of the claims 1-5, characterised in that connected upstream of the voltage limiter (11) there is an additional voltage-limiting arrangement (16), upstream of the rectifier (10), in order to attain surge withstand strength.

## Revendications

1. Sectionneur parasurtension, qui fonctionne avec des parasurtensions (1) par rapport à la terre (2) pour la protection de dispositifs utilisateurs (3) ou de réseaux ou parties de réseau à protéger, les parasurtensions (1) étant quant à eux protégés, dans le cas de défaillances, par un dispositif de surveillance (4), qui agit sur au moins un contact de travail (5) dans un conducteur de mise à la terre dans un trajet de dérivation, le dispositif de surveillance (4) fonctionnant avec un noyau torique (6) en matériau magnétiquement conducteur, dans lequel passe le conducteur de mise à la terre, en tant que conducteur primaire (7) ou en tant qu'enroulement primaire, et dont l'enroulement secondaire (8) est relié à un déclencheur (9), qui est en liaison active avec au moins le contact de travail (5), caractérisé par le fait qu'il est prévu, à la suite de l'enroulement secondaire (8), un montage redresseur (10), qui alimente, par l'intermédiaire d'un limiteur de tension (11) et d'un dispositif d'élargissement d'impulsions (12), un circuit à retard (13), à la suite duquel est monté le déclencheur (9).

2. Sectionneur parasurtension selon la revendication 1,
caractérisé par le fait que le montage redresseur (10) est réalisé sous la forme d'un redresseur en pont.

3. Sectionneur parasurtension selon la revendication 1,
caractérisé par le fait que le limiteur de tension (11) est une diode.

4. Sectionneur parasurtension selon la revendication 1,
caractérisé par le fait que le dispositif d'élargissement d'impulsions (12) est réalisé sous la forme d'un condensateur.

5. Sectionneur parasurtension selon la revendication 1,
caractérisé par le fait que le circuit à retard (13) est réalisé, d'une manière connue en soi, sous la forme d'un circuit RC (à résistance et condensateur).

6. Sectionneur parasurtension selon l'une des revendications 1 à 5,
caractérisé par le fait qu'on prévoit, du côté amont du limiteur de tension (11), une limitation supplémentaire de la tension (16) avant le redresseur (10) afin d'obtenir une résistance aux courants de choc.
